# EUROPEAN PATENT APPLICATION

(11) **EP 1 289 210 A2**
(43) Date of publication of application: **05.03.2003**
(21) Application number: 02255536.1
(22) Date of filing: 07.08.2002
(51) Int. Cl.: H04L 12/58

(54) **Mail transmitting/receiving device and method**

(30) Priority: 31.08.2001 JP 2001262654
(71) Applicant: Hitachi, Ltd., Chiyoda-ku, Tokyo (JP)
(72) Inventor: Nishiyama, Mika, c/o Hitachi, Ltd., ITP Group, Chiyoda-ku, Tokyo, 100-8220 (JP); Shimizu, Hiroshi, Chiyoda-ku, Tokyo, 100-8220 (JP); Ikeda, Ryuichi, Chiyoda-ku, Tokyo, 100-8220 (JP); Kobayashi, hitoshi, Chiyoda-ku, Tokyo, 100-8220 (JP)
(74) Representative: Calderbank, Thomas Roger

(57) **Abstract**

An object of the present invention is to provide a method for transmitting and receiving mails and a device utilized therefor, which are capable of associating a plurality of data, and transmitting and receiving the associated data via mail. To achieve this object, a filename is attached to a first data and stored on a storage medium, and a filename, at the least a portion of which is common to the filename of the above-mentioned first data, is attached to a second data and stored on the above-mentioned storage medium, and when instructions for transmitting the above-mentioned first data are inputted, the above-mentioned first data and second data are read out from the above-mentioned storage medium, and the above-mentioned first data and second data are transmitted.

## Description

The present invention relates to a method for transmitting and receiving pictures, sounds and other such data via mail, and the device utilized therefor.

Cellular telephones and notebook computers with built-in cameras have been commercialized in recent years, making it possible to send and receive not only text, but also pictures and sound via mail. Further, once advances in data communications technology enable communications speeds that are several tens of times faster than before, it should become possible to send and receive not only single pictures and sounds, but also combinations thereof.

A mail recording and reproduction device, having as an object the sending and receiving via mail of data, which combines pictures and sound like this, is disclosed in Japanese Patent Laid-open No. 2000-293446. This device carries out reproduction by associating a desired motion picture and still picture by attaching link data to photographed motion picture and still picture data, and retrieving this link data.

In the above-mentioned device, because motion pictures, still pictures and sound are all linked together with link data, and are treated as one piece of data constituted using an originally defined data format, special decoding means corresponding to the above-mentioned data format is required to reproduce this data. Further, when the types of files capable of being transmitted and received via mail are limited, not only is specially formatted data impossible to decode, but there arises the problem that transmission and reception themselves become impossible.

Accordingly, an object of the present invention is to provide a method and device, which enable a plurality of data, which is constituted by existing data formats without using a special data format, to be associated and managed, and which enable this plurality of data to be transmitted and received via mail.

To achieve the above-mentioned object, a mail transmitting method related to the present invention is a method for transmitting a first data and a second data, and when either names or symbols, at the least a portion of which are alike, are attached to the first data and the second data, and these data are stored on a storage medium, and instructions for mailing the above-mentioned first data are inputted, the above-mentioned first data and second data are read out from the above-mentioned storage medium, and the above-mentioned first data and second data are transmitted. Further, in a mail receiving method related to the present invention, when two or more data are comprised in a received mail, either names or symbols, at the least a portion of which are alike, are attached to the above-mentioned two or more data, and the above-mentioned two or more data are mutually associated and stored on a storage medium.

### IN THE DRAWINGS

Fig. 1 is a diagram showing an example of one constitution of a mail transmitting and receiving device related to an embodiment of the present invention;
Fig. 2 is a diagram showing an example of a data directory structure stored in data storage in a mail transmitting and receiving device related to an embodiment of the present invention;
Fig. 3 is a diagram showing examples of file attributes managed by the data storage file device in a mail transmitting and receiving device related to an embodiment of the present invention;
Fig. 4 is a diagram showing examples of screens displayed on a display part in a mail transmitting and receiving device related to an embodiment of the present invention;
Fig. 5 is a diagram showing examples of screens displayed on a display part in a mail transmitting and receiving device related to an embodiment of the present invention;
Fig. 6 is a diagram showing examples of screens displayed on a display part in a mail transmitting and receiving device related to an embodiment of the present invention;
Fig. 7 is a diagram showing the flow of a mail transmitting process in the transmission controller of the controller in a mail transmitting and receiving device related to an embodiment of the present invention;
Fig. 8 is a diagram showing an example of a screen displayed on the display part in a mail transmitting and receiving device related to an embodiment of the present invention;
Fig. 9 is a diagram showing examples of screens displayed on a display part in a mail transmitting and receiving device related to an embodiment of the present invention;
Fig. 10 is a diagram showing the flow of a data reproduction process in the reproduction controller of the controller in a mail transmitting and receiving device related to an embodiment of the present invention;
Fig. 11 is a diagram showing the flow of a data deletion process in the data storage controller of the controller in a mail transmitting and receiving device related to an embodiment of the present invention;
Fig. 12 is a diagram showing an example of a display screen on a display part in a mail transmitting and receiving device related to an embodiment of the present invention; and
Fig. 13 is a diagram showing an example of a display screen on a display part in a mail transmitting and receiving device related to an embodiment of the present invention.

The embodiments of the present invention will be explained hereinbelow by referring to the figures.

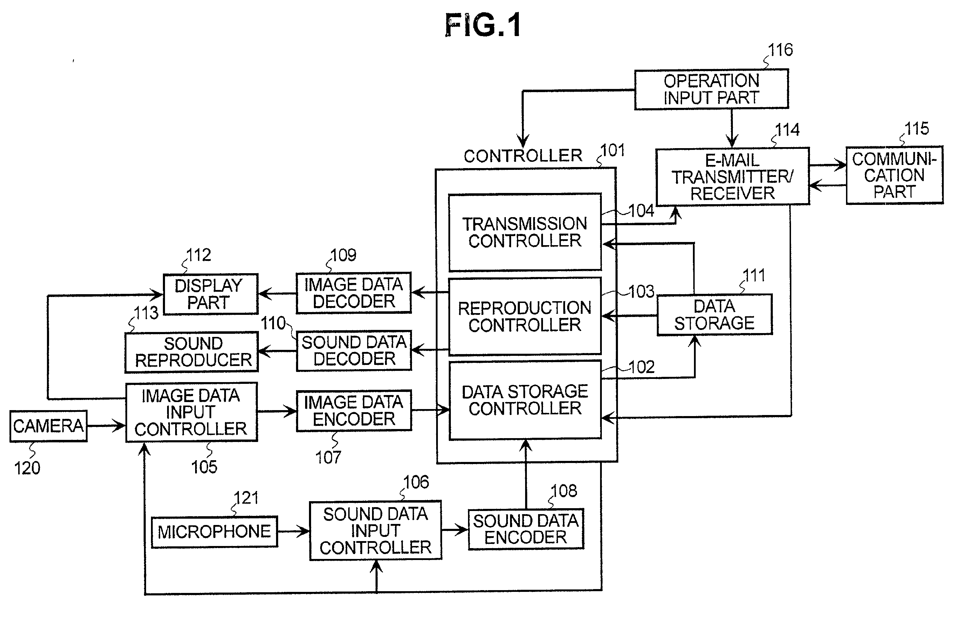

Fig. 1 is a diagram showing an example of a constitution of a cellular telephone, which applies the mail transmitting and receiving method related to an embodiment of the present invention. Furthermore, the application of this mail transmitting and receiving method is not limited to cellular telephones, but rather is applicable to PDA and other such portable information terminals other than cellular telephones, as well as personal computers, digital cameras and the like.

In the figure, a controller 101 comprises a data storage controller 102, a reproduction controller 103 and a transmission controller 104, and controls data storage and reproduction, and mail transmission. An image data input controller 105 controls the inputting of image data from a camera 120, and a sound data input controller 106 controls the inputting of sound data from a microphone 121. An image data encoder 107 encodes image data, and a sound data encoder 108 encodes sound data. It is desirable for these encoders to correspond to a plurality of file format standards, and for a user to be able to select a file format to be encoded. However, the present invention is not limited thereto, and can also correspond to only one file format standard. Furthermore, in the case of image data, file format standard refers, for example, to JPEG (Joint Photographic Experts Group), GIF (Graphic Interchange Format), PNG (Portable Network Graphics) and the like. Further, in the case of sound data, it refers, for example, to MIDI (Musical Instruments Digital Interface), MP3 (MPEG Audio Layer - 3), PCM (Pulse Code Modulation) and so forth.

An image data decoder 109 decodes encoded image data, and a sound data decoder 110 decodes encoded sound data. These decoders correspond to a plurality of file format standards, and can correspond to a file format that corresponds to either image data encoder 107 or sound data encoder 108, and can correspond to a file format, which enables transmitting and receiving via a mail transmitter/receiver 114. A data storage 111 stores data, a display part 112 displays image data and the like, and a sound reproducer 113 reproduces and outputs sound data. Mail transmitter/receiver 114 transmits and receives mail and the like via a communication part 115. An operation input part 116 comprises function keys for inputting various instructions, such as a ten-key pad for inputting text and numerals, and an operating mode switch, and can accept operations from a user.

Furthermore, in this embodiment, a camera 120 or other such image data inputting part, a microphone 121 or other such sound data inputting part, and a communication part 115 are built in, but the present invention is not limited to this, and these parts can also be externally connected equipment. In this case, a part for transmitting and receiving data between the externally connected equipment and either image data input controller 105, or sound data input controller 106, or mail transmitter/receiver 114 will also be necessary.

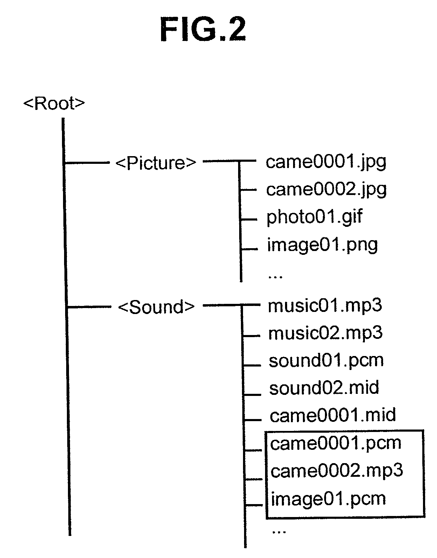

Fig. 2 shows an example of a directory structure stored in data storage 111. In this embodiment, the same file name (for example, "came001") is attached to a plurality of data managed by association, like the image data "came0001.jpg" and sound data "came0001.pcm" shown in Fig. 2. In accordance therewith, the association of a plurality of data is carried out without converting to a special data format.

A directory structure is stored by using a file device for managing files. Fig. 2 shows a tree structure of this logical directory hierarchy. Names, which appear in the node portion of the tree structure are shown enclosed in brackets (<,>) in the case of a directory, and files are shown without brackets. For example, <Root> signifies a root directory comprising a number of subdirectories, and came0001.jpg signifies one certain file. In this directory structure, a directory for storing image data, and a directory for storing sound data are provided in the root directory, and these directories are assigned the names <Picture> and <Sound>, respectively.

Further, it is desirable to attach an extension (.jpg or the like) to a file name, and to be able to distinguish the file format standard for encoding image data or sound data by the extension. When an extension is not attached, a function is needed for distinguishing a file format by a file header or the like in the file device or the reproduction controller 103.

Furthermore, the subdirectories comprising a root directory are not limited to the above two directories, and other directories can be added. Further, the names of the directories are also not limited to the above-mentioned names. Further, the directory hierarchy shown in Fig. 2 is not mandatory, and all files can be stored directly in the root directory.

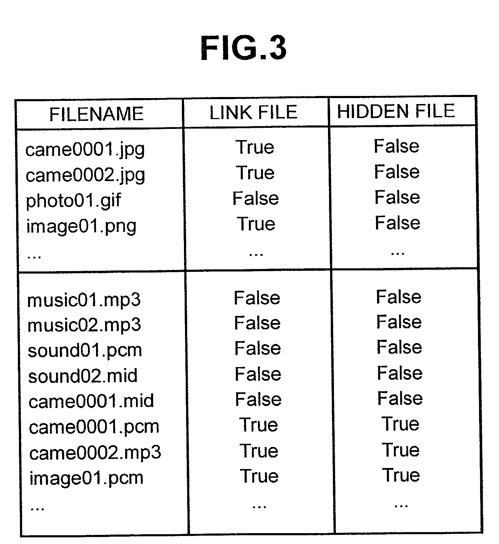

Fig. 3 shows columns of file attributes managed by the file system of data storage 111 in tabular format. In this embodiment, the two attributes of link files and hidden files are provided as file attributes. Furthermore, these file attributes are not data attached to the motion picture and sound data per se, but rather are data managed by the data storage 111 file system. Thus, since managing attribute data in data storage 111 eliminates the need to attach attribute data to motion picture data and the like, a plurality of data can be associated and stored without using a special data format.

A "link file" attribute indicates the presence of an associated file, and is a newly defined attribute inside the file system of this embodiment. A link file attribute is set at "True" when there is other data associated thereto, and is set at "False" when there is not. For example, the link attribute for a file of image data named came0001.jpg, which is in the <Picture> directory of Fig. 3, and a file of sound data named came0001.pcm, which is in the <Sound> directory, and is associated with the above-mentioned image data, is set at "True".

A "hidden file" attribute is used to set whether or not the user is permitted to access a file, and is being utilized in the file systems used in personal computers currently on the market. Data, for which the hidden file attribute is set at "True", is constituted such that it cannot be accessed by a user. For example, the hidden file attributes of all the files enclosed by a square dotted line in the <Sound> directory of Fig. 2 are set at "True". Therefore, when displaying a list of data that exists in the <Sound> directory, the data enclosed inside the square will either not be displayed in the list, or a display indicating that this data is not capable of being selected will appear. Setting a hidden file attribute makes it possible to prevent a user from mistakenly deleting an associated file.

These file attributes are defined using a specified bit in the file system, in which 1 is set for "True", and 0 is set for "False". Further, in this embodiment, file attributes are only set by controller 101, and are stored in an area that cannot be viewed by the user so that a user is unable to change the settings. Furthermore, file attributes are not limited to the above-mentioned two attributes, and other attributes can be added.

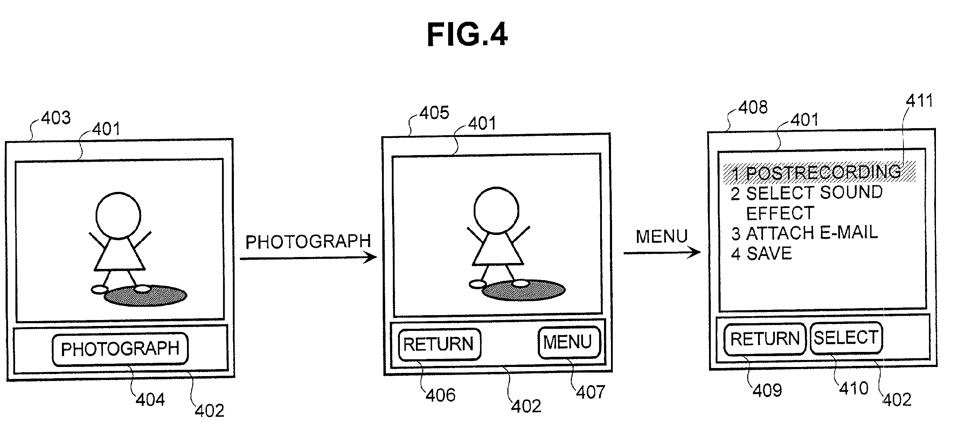

Next, an operating method for a mail transmitting and receiving device related to an embodiment of the present invention will be explained using Fig. 4 through Fig. 6.

Fig. 4 through Fig. 6 are all screens displayed on display part 112, and comprise a data display area 401 for displaying images and the like, and an operation information area 402 for explaining operations by the operation input part 116. The buttons capable of being operated on each screen are displayed in operation information area 402. Three keys - a left key, a middle key and a right key - are provided in operation input part 116 for the buttons displayed in operation information area 402, and these buttons correspond to the pressing of the respective keys.

Furthermore, operation input is not limited to pressing keys, and the buttons can also be those that operate by directly clicking on them with a pointing device or the like. By using a pointing device, inputting can be performed easily even by a user, who is not accustomed to operating keys. Further, operation input can also correspond to both keys and a pointing device. Further, in Fig. 4 through Fig. 6, from one to three buttons are arranged in operation information area 402, but the present invention is not limited thereto.

Fig. 4 shows examples of screens when photographing a still image. In screen 403, data display area 401 serves as a camera viewfinder, and a real-time moving picture is displayed on the screen as-is without recording the image to be photographed (hereinafter referred to as a "camera-through display"). Further, a photograph button 404 is arranged in operation information area 402. When photograph button 404 is selected by operation input part 116, the display switches to screen 405.

In screen 405, the photographed still image is displayed in data display area 401. A return button 406 and a menu button 407 are arranged in operation information area 402, and when return button 406 is selected by operation input part 116, the display switches to screen 403. If menu button 407 is selected, the display switches to screen 408.

In screen 408, an operation menu for the photographed image is displayed in data display area 401. Four menu items of "post-recording" for recording sound; "select sound effect" for selecting sound data recorded in data storage 111; "mail attachment" for automatically appending the photographed image to a mail message; and "save" for saving the photographed image to data storage 111 are provided. A return button 409 and a select button 410 are arranged in operation information area 402, and when the return button 409 is selected by operation input part 116, the display switches over to screen 405. Further, when the select button 410 is selected, the menu indicated by cursor 411 is executed. Cursor 411 is moved by operation input part 116. Further, a menu can also be selected by directly inputting the number assigned to the menu via operation input part 116.

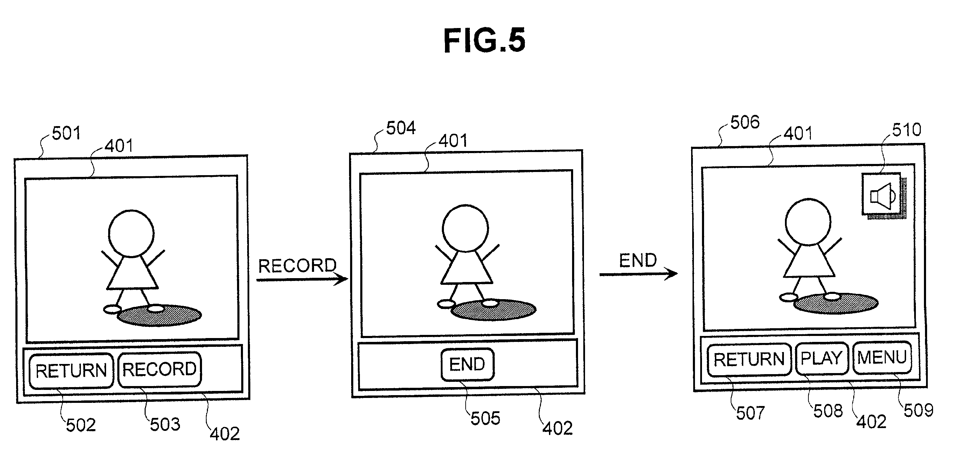

Fig. 5 shows examples of screens displayed when the menu "post-recording" is selected in screen 408 of Fig. 4. In screen 501, a photographed still image is displayed in data display area 401, and a return button 502 and record button 503 are arranged in operation information area 402. When the return button 502 is selected using the operation input part 116, the display switches to screen 408 of Fig. 4. Further, when the record button 503 is selected, the display switches to screen 504.

In screen 504, an end button 505 is arranged in the operation information area 402. When the end button 505 is selected via the operation input part 116, the display switches over to screen 506. In screen 506, a return button 507, a play button 508 and a menu button 509 are arranged in the operation information area 402. When the return button 507 is selected using the operation input part 116, the display switches to screen 501. Further, when the play button 508 is selected, a recorded sound is reproduced, and when the menu button 509 is selected, the display switches to screen 408 of Fig. 4.

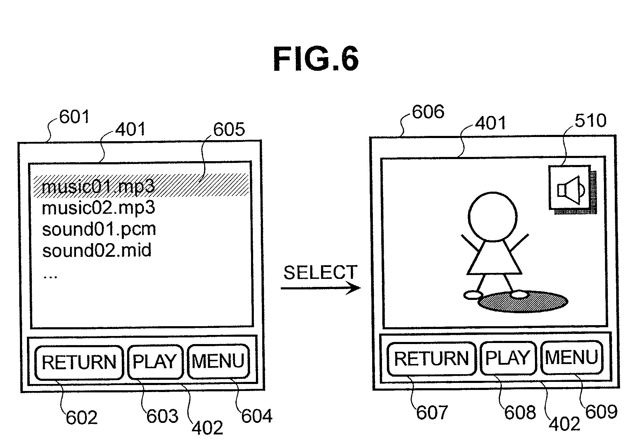

Fig. 6 shows examples of screens displayed when the menu "select sound effect" is selected on screen 408 of Fig. 4. In screen 601, a list of sound files stored in data storage 111 is displayed in data display area 401. A return button 602, a select button 603 and a play button 604 are arranged in operation information area 402. When the return button 602 is selected via the operation input part 116, the display switches over to screen 408 of Fig. 4. When the play button 604 is selected, the sound file on which the cursor 605 is resting is reproduced. When the select button 603 is selected, the display switches to screen 606.

The content displayed on screen 606 is the same as that of screen 506 of Fig. 5. When the return button 607 is selected via operation input part 116, the display switches to screen 601, and when the play button 608 is selected, the sound file selected in screen 601 is reproduced. Further, when the menu button 609 is selected, the display switches to screen 408 of Fig. 4.

Furthermore, it is desirable to display an icon 510 indicating that "post-recording" and "select sound effect" have been selected above the image displayed in data display area 401. By displaying an icon in this manner, the user is able to readily ascertain whether or not post-recording and such have been performed.

The above-mentioned photograph and save operations will be explained in detail. When a still image is photographed as shown in Fig. 4, controller 101 controls image data input controller 105, captures image data from a camera or the like at a rate of 15 frames per second, for example, and sends this data one frame at a time to display part 112. Display part 112 is capable of displaying input from a camera or the like on a screen as-is without recording such as a moving image by updating the frame each time image data is received from image data input controller 105. Next, when photograph button 404 is selected, image data input controller 105 stops capturing the image from a camera or the like, and cancels the transmission to display part 112. Since no frames are being received, display part 112 does not update the display, and it appears as if the photographed still image is being displayed in display part 112. Further, image data input controller 105 holds the image data captured last. When the return button 406 is selected, and processing returns to the camera-through display (screen 403), the image data held by the image data input controller 105 is released, and image data capture is performed once again.

When "save" is selected in screen 408 of Fig. 4, controller 101 sends the image data being held by image data input controller 105 to image data encoder 107 and encoding is performed. With regard to the image data encoding method (file format), image data encoder 107 performs encoding using only a file format selected beforehand by a user from among corresponding file formats, or a prescribed file format. Next, data storage controller 102 attaches a filename to image data encoded by image data encoder 107, and stores in the <Picture> directory of data storage 111. It is desirable to attach an extension corresponding to the encoded file format to the filename. For example, when image data is encoded using the JPEG format, use came0001.jpg.

Further, when performing the "post-recording" shown in Fig. 5, controller 101 implements control such that sound data input controller 106 commences capturing sound data when sound button 503 is selected. When sound data is held as-is, the quantity of data increases. Therefore, it is desirable for captured sound data to be sent to sound data encoder 108, and encoded in real-time. With regard to the sound data encoding method (file format), sound data encoder 108 performs encoding using only a file format selected beforehand by a user from among corresponding file formats, or a certain fixed file format.

When the end button 505 is selected, controller 101 terminates the capturing of sound data by sound data input controller 106. Data storage controller 102 attaches the same filename as that of the image data to the sound data encoded by sound data encoder 108. For example, when sound data is encoded using the PCM format, data storage controller 102 makes the filename 'came0001.pcm', and stores in the data storage 111 <Sound> directory. Thus, image data and sound data can be associated without using a special data format.

When the play button 508 is selected, reproduction controller 103 of controller 101 reads out sound data, which data storage controller 102 stored in data storage 111, and sends to sound data decoder 110. Sound data decoder 110 decodes the received sound data, and reproduces and outputs it to sound reproducer 113. Further, when the return button 507 is selected, data storage controller 102 deletes the sound file stored in data storage 111.

When processing returns to screen 408 of Fig. 4, and "save" is selected, data storage controller 102 sets the link file attribute of the image data file to "True" and the hidden file attribute to "False", and sets both the link file attribute and the hidden file attribute of the sound data file to "True". Thus, by setting the hidden file attribute of the sound data file to "True", thus preventing the user from accessing this file, from the user side, the image data and the sound data appear to have become one data, thus making it possible to prevent data management from becoming complicated. Further, it is also possible to prevent a user from accidentally deleting sound data attached to image data.

Furthermore, in this embodiment, for post-recording, sound data was associated with picture data as-is and stored, but the present invention is not limited thereto. An optional filename can be given to sound data produced by post-recording, and this sound data can be stored and selected as a sound effect, which will be explained hereinbelow.

Next, the selection of a sound effect as shown in Fig. 6 will be explained. When either play button 604 of screen 601, or play button 608 of screen 606 is selected, reproduction controller 103 of controller 101 reads out sound data selected from data storage 111. Then, reproduction controller 103 selects a decoder corresponding to the file format of the read-out sound data, and sends the sound data to sound data decoder 110. Sound data decoder 110 decodes the received sound data, and reproduces and outputs it to sound reproducer 113.

When processing returns to screen 408 of Fig. 4, and "save" is selected, data storage controller 102 copies the selected sound data file, and, leaving the extension as-is, changes the filename to the same filename as the image data. For example, when attaching sound data music01.mp3 to image data came0002.jpg, data storage controller 102 copies the file of the sound data, and changes the filename to came0002.mp3. At this time, the link file attribute of the image data file is set to "True", the hidden file attribute of the image data file is set to "False", and the link file attribute and hidden file attribute of the sound data file are set to "True". Furthermore, as for sound data stored in data storage 111, for example, there is sound data, which was downloaded from the Internet, sound data received via mail, and MIDI and other such sound data created by oneself. Copyright information on all these data are managed by either file headers or file attributes, and when sound data, which is copyrighted, and for which mail transmission is restricted, is selected, a display, either to the effect that association is not possible, or to the effect that mail cannot be transmitted, will be shown.

Furthermore, in the above explanation, a situation, in which either post-recording or sound effect was selected after saving picture data, was explained, but the present invention can also be constituted such that photographed picture data is stored temporarily in memory or the like, and saved after selecting post-recording or sound effect. In that case, sound data captured by post-recording is either held in a storage area temporarily without being given a filename, or, as described hereinabove, is assigned an arbitrary filename, and stored in the <Sound> directory.

Furthermore, post-recording or sound effect selection can also be implemented for image data stored beforehand in data storage 111 instead of an image photographed with a camera or the like, and this data can be saved. Image data previously stored in data storage 111, for example, can either be image data downloaded from the Internet, or image data received via mail. The same operations and processes as hereinabove are carried in this case as well. For example, when attaching sound data sound01.pcm to image data image01.png, the sound data file is copied, the filename is changed to image01.pcm, and the link file attribute and hidden file attribute are set to "True". Further, the link file attribute of the image data file is also set to "True". Furthermore, when the link file attribute of the image data file has already been set to "True", a warning to the effect that associated data already exists, is displayed. Further, copyright information is managed similar to sound data, and when copyrighted data is selected, a display, to the effect that association is not possible due to copyrighting, is shown.

As explained hereinabove, making the filenames of the image data and sound data the same filename enables a plurality of data to the associated and stored without using a special data format. Furthermore, in this embodiment, the filenames were made the same, but the present invention is not limited to making the entire filename the same, and can be constituted such that a portion of the filename is made the same. In this embodiment, data storage controller 102 automatically assigned the same filenames, but the present invention can be constituted such that a user inputs these filenames. Further, the present invention is not limited to filenames, and can be constituted such that a plurality of data can be mutually associated by storing the same marks or symbols as attribute data.

Further, attaching a link file attribute, which indicates the presence of an associated file, to a file stored in data storage 111 can facilitate a search. That is, when retrieving associated data, because a link file attribute is attached, and because a narrow-down is performed under the condition that the link file attribute be "True", the same filenames are retrieved from among the narrowed filenames, enabling faster retrieval than when retrieving the same filename data from all files.

Further, when associated data is retrieved using only a filename, if there exists unassociated sound data, which has the same filename, there is the risk of retrieving erroneous data. For example, when retrieving data associated with came0001.jpg in the <Picture> directory of Fig. 3, if retrieval is performed using only a filename, the two files came0001.pcm and came0001.mid in the <Sound> directory will be retrieved, but when a same filename search is performed, while narrowing the files down to those with "True" link file attributes, only came0001.pcm is retrieved. Thus, associated data can be accurately retrieved by attaching a link file attribute instead of only using the same filename.

However, even when a link file attribute is not attached, it is possible to associate a plurality of data by using the same filename. Further, although retrieval time and power consumption will be greater than when a link file attribute is attached, it is possible to search for the presence of files associated to a user-selected file by checking filenames.

Furthermore, since a file attribute can be defined by one bit inside a file system, the required storage capacity can be held to the minimum. Further, instead of a fixed extension, using different file format-corresponding extensions with each data makes it possible to support a variety of file formats.

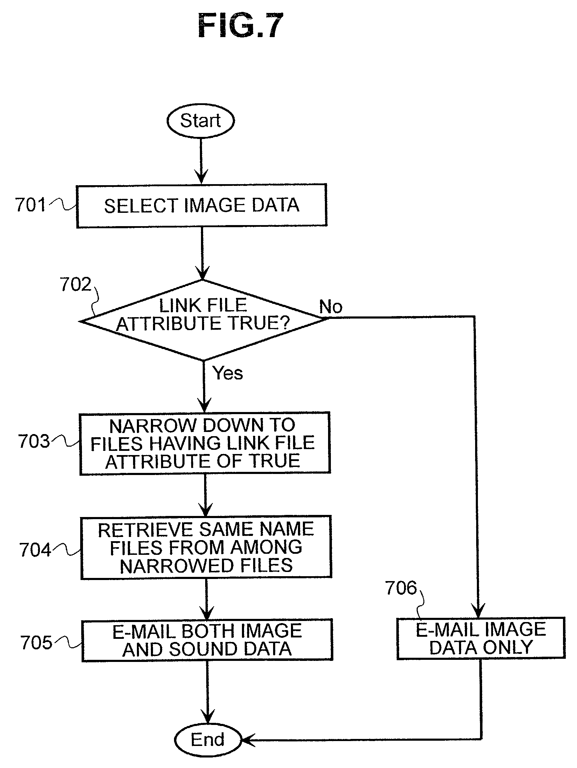

Next, the image data and sound data mail transmission method in this embodiment will be explained. Fig. 7 is a flowchart showing the mail transmission process for image data and sound data in transmission controller 104 of controller 101. When an image data mail transmission command is received from operation input part 116 (Step 701), transmission controller 104 reads out image data from data storage 111, and references a link file attribute (Step 702). When the link file attribute is "True", files with "True" link file attributes are selected out from data storage 111 (Step 703), sound data of the same filename is retrieved from among the selected files (Step 704), and both the image data and the retrieved sound data are transmitted as a mail from mail transmitter/receiver 114 via communication part 115 (Step 705). Further, when the link file attribute is "False" in Step 702, only the image data is transmitted as a mail (Step 706).

As explained hereinabove, according to this embodiment, a user can simultaneously mail sound data associated with image data by selected only the image data, thus doing away with the need for troublesome operations like selecting both image data and sound data.

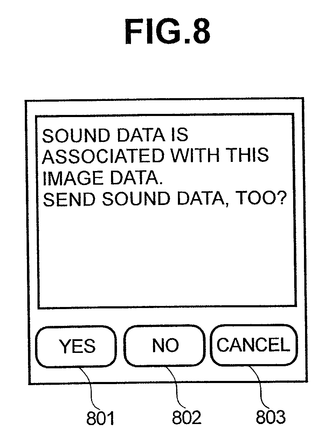

Furthermore, when both image data and sound data are to be transmitted via mail, it is desirable for a user to confirm whether or not a plurality of data will be transmitted. For example, the screen of Fig. 8 is displayed, and a plurality of data is transmitted simultaneously only when a user selects button 801 ("Yes"). Thus, there is no danger of a user being subject to high communications fees without his knowledge. Further, when a user selects the no button 802, only image data is transmitted, and when the cancel button 803 is selected, neither data is transmitted via mail. Further, when a mail is transmitted, the total amount of data transmitted can be displayed and confirmed by the user. Furthermore, if the criteria for communications charges required to transmit the total amount of data is also displayed, it is more effective.

Furthermore, image data and sound data can also be sent as file attachments rather than direct mail transmissions.

Since a file attribute is information managed in the file system of data storage 111, and is not information attached to the data itself, when data is transmitted via mail, only the data is transmitted, and the file attribute is not transmitted.

Next, the method for reproducing image data and sound data in this embodiment will be explained.

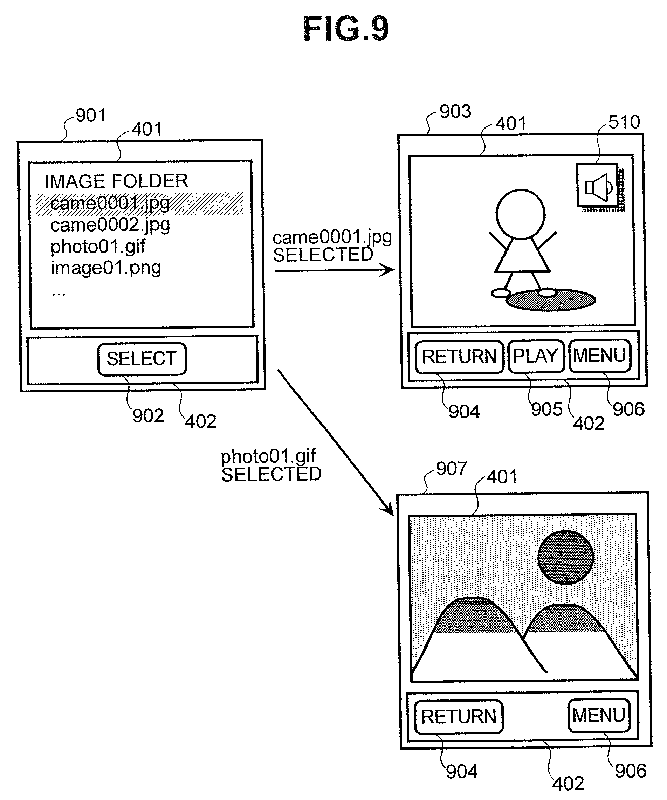

Fig. 9 shows examples of screens for selecting and reproducing data stored in data storage 111. The constitution of the screen is the same as that of Fig. 4. In screen 901, of the data stored in data storage 111, a list of data stored in the <Picture> directory is displayed by filename in data display area 401, and select button 902 is arranged in operation information area 402. When came0001.jpg is selected using operation input part 116, the display switches to screen 903.

In screen 903, the image selected in data display area 401 is displayed, and an icon 510 indicating that sound is attached is also displayed. Further, a return button 904, a play button 905, and a menu button 906 are arranged in operation information area 402. When the return button 904 is selected using operation input part 116, the display switches to screen 901. Further, when the menu button 906 is selected, the display switches to screen 408 of Fig. 4. Further, when the play button is selected, sound data (came0001.pcm) attached to came0001.jpg is reproduced. Furthermore, even when the play button is not selected, it is desirable that sound be reproduced at the same time that the image is displayed. Screen 907 shows an example of a screen of when image data (for example, photo01.gif), to which sound has not been added, is selected. Screen 907 is practically the same as screen 903, but differs in that icon 510 is not displayed, and there is no play button 905.

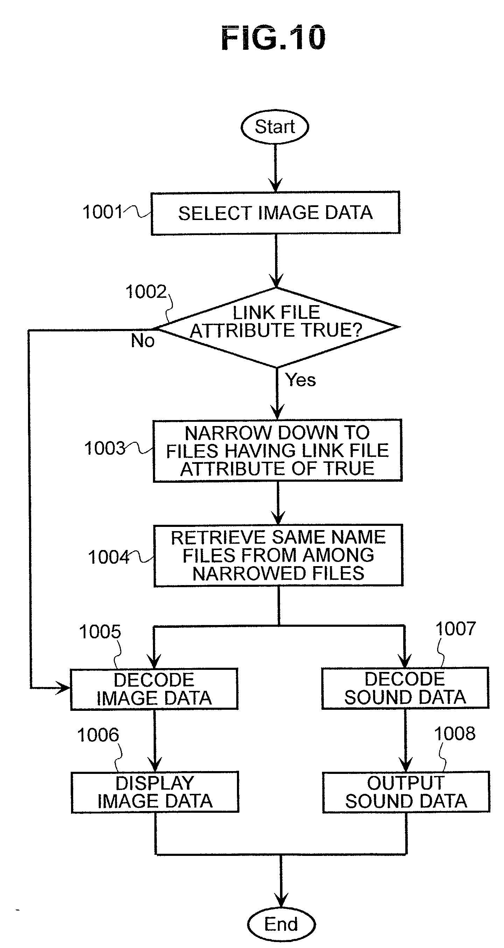

The operation of controller 101 in the aforementioned operations will be explained using Fig. 10. Fig. 10 is a flowchart showing the process for reproducing image data and sound data in reproduction controller 103 of controller 101. When an image data reproduction command is received from operation input part 116 (Step 1001), reproduction controller 103 reads out the image data from data storage 111, and references the link file attribute (Step 1002). When the link file attribute is "True", files having "True" link file attributes are selected out from data storage 111 (Step 1003). and sound data of the same filename is retrieved from among the selected files (Step 1004). Next, the file format of the image data is determined from the extension of the image data read out from data storage 111, and this image data is decoded by an image data decoder 109 corresponding to the file format (Step 1005). The decoded image data is displayed on the display part 112 (Step 1006). At this same time, the sound data retrieved by Step 1004 is read out from data storage 111, the file format is determined from the extension of the sound data, and this sound data is decoded by a sound data decoder 110 corresponding to the file format (Step 1007).

Then, the decoded sound data is outputted to the sound reproducer (Step 1008). It is desirable that the timing at which image data is displayed on display part 112 and the timing at which sound data is outputted by sound reproducer 113 be synchronized by controller 101. Further, when the link file attribute is "False" in Step 1002, processing jumps to Step 1005 without going through Step 1003 and Step 1004, and the processing of Step 1007 and Step 1008 is not carried out.

As explained hereinabove, according to this embodiment, sound data corresponding to image data can be retrieved, and can be reproduced simultaneously by referencing filename and file attribute settings.

Further, using extensions that correspond to file formats instead of a special extension makes it possible to support a variety of file formats. Further, an appropriate image data decoder or sound data decoder can be instantly determined by the extension.

Furthermore, in this embodiment, image data to be reproduced was selected from a list of filenames, but the present invention can also be constituted such that a plurality of thumbnails, which display image data in a reduced condition, is lined up and displayed on display part 112, and this image data is selected from the thumbnails. In this case, it is desirable to also display icon 510 in the thumbnail display of image data for which there is associated sound data.

Next, the image data and sound data mail reception method in this embodiment will be explained. When data is received via mail via communication part 115, mail transmitter/receiver 114 sends the received data to data storage controller 102, and stores same in data storage 111. When there is image data and sound data of the same name at this time, data storage controller 102 sets the link file attribute of the image data to "True" and the hidden file attribute to "False", and sets the link file attribute and hidden file attribute of the sound data to "True". Data, which mail transmitter/receiver 114 sends to data storage controller 102, is limited to only that data, which was received in one mail for processing one time (that is, data received simultaneously from the same source), and data received in a plurality of mails is not sent to data storage controller 102 at the same time. This eliminates the risk of mistakenly associating data of the same filename received in another mail. Furthermore, it is desirable for a user to confirm whether or not a link has been set before setting a file attribute.

When a received data reproduction command has been sent to mail transmitter/receiver 114 from operation input part 116, mail transmitter/receiver 114 calls reproduction controller 103 of controller 101, and reproduces the data. The data reproduction method is as described hereinabove.

As explained hereinabove, according to this embodiment, it is possible to associate and reproduce image data and sound data, which was received by mail, and which does not have link information. Furthermore, in this embodiment, mail transmitter/receiver 114 stored data received by mail in data storage 111 via data storage controller 102, and reproduced same via reproduction controller 103, but the present invention is not limited thereto. For example, mail transmitter/receiver 114 can also be equipped with a temporary storage area, and image data and sound data reproduction functions, and can hold and reproduce received data in the temporary storage area. In this case, it is desirable that mail transmitter/receiver 114 also possess functions for simultaneously reproducing data of the same filename similar to reproduction controller 103.

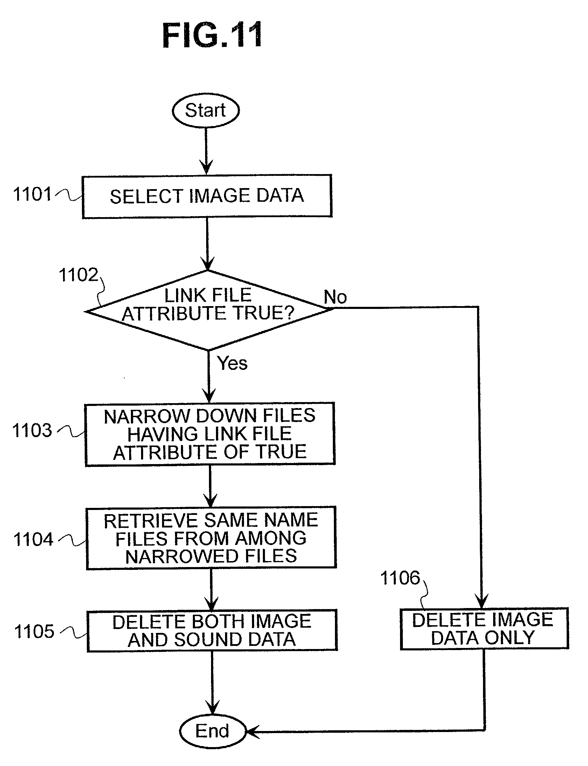

Next, the image data and sound data deletion method in this embodiment will be explained. Fig. 11 is a flowchart showing the image data and sound data deletion process in data storage controller 102 of controller 101. When an image data deletion command is received from operation input part 116 (Step 1101), data storage controller 102 reads out the image data from data storage 111, and references the link file attribute (Step 1102). When the link file attribute is "True", files having "True" link file attributes are selected from data storage (Step 1103). Sound data of the same filename is retrieved from among the selected files (Step 1104), and both the image data and the retrieved sound data are deleted from data storage 111 (Step 1105). Further, in Step 1102, when the link file attribute is "False", only the image data is deleted from data storage 111 (Step 1106).

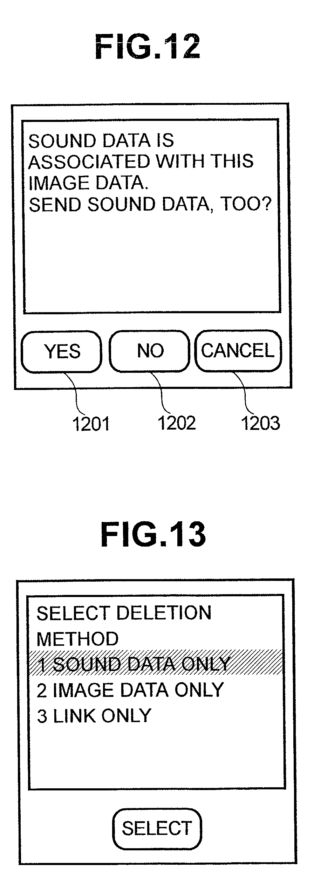

Furthermore, when both image data and sound data are deleted, a user can also confirm whether or not a plurality of data is to be deleted. For example, the screen of Fig. 12 is displayed, and a plurality of data is simultaneously deleted only when the user selects the yes button 1201. Further, when a user selects the no button 1202, only image data is deleted, and when the cancel button 1203 is selected, neither data is deleted.

Further, a user can also select to delete only image data or only sound data, and only the selected data will be deleted. Or, a user can select to leave image data and sound data as-is, and delete only the link of the image data and sound data. For example, as shown in Fig. 13, a menu screen for selecting a deletion method is displayed, and when a user selects "sound data only" from the menu, the link file attribute of the image data is set to "False" after the sound data has been deleted from data storage 111. Further, when "image data only" is selected, the link file attribute and hidden file attribute of the sound data are set to "False" after the image data has been deleted from data storage 111. When "link only" is selected, the link file attributes of the image data and sound data are set to "False", and the hidden file attribute of the sound data is set to "False".

Furthermore, in a case in which three of more data are associated, when one of these data is to be deleted, it is desirable to leave the link file attributes of the other data, which are not to be deleted, set to "True" as-is. In accordance therewith, the data associations that were not deleted are retained.

As explained hereinabove, according to this embodiment, by attaching the same filename to a plurality of data, it is possible to associate and store image data and sound data without generating link information anew. Further, it is possible to simultaneously reproduce associated image data and sound data, or transmit same via mail. Further, since excess information is not added, it is possible to either store or mail this associated data using a minimum amount of data.

Further, according to this embodiment, by providing a link file attribute to a data file to be stored, when retrieving associated data, data having a "True" link file attribute is selected out, and the same filenames are retrieved. This enables faster retrieval than when the same filename is retrieved from all the files.

Further, by using the same filename for data association, and setting a link file attribute, it is possible to retrieve the correct associated data even when other, unassociated data having the same filename exists.

Further, by setting the hidden file attribute of associated sound data to "True", and preventing the user from accessing this file, from the user side, the image data and the sound data appear to be have become one data, thus making it possible to prevent data management from becoming complicated. Further, this also eliminates the risk of a user mistakenly deleting sound data that is attached to image data.

Further, using extensions that correspond to file formats instead of a special extension makes it possible to support a variety of file formats, and an appropriate decoder can be instantly determined by the extension.

Furthermore, a plurality of image data-associated sound data can also be used. For example, if there is sound data with different extensions, a plurality of associations can be made using the same filename. Further, a part for multiplexing and outputting a plurality of sound data is provided. In accordance therewith, it is possible to attach recorded sounds and sound effects to an image and reproduce these data simultaneously.

Further, the present invention can be constituted such that, when associating a plurality of data having the same extension, for example, numbers can be added to filenames, and data can be continuously reproduced in numerical order. This enables the association and storage of a plurality of image data or a plurality of sound data having the same data format.

Furthermore, in this embodiment, an explanation of image data was given using only still images, but image data can also be moving pictures. Further, association can be performed not only for image data and sound data, but for text data as well. For example, a moving picture application, which associates two moving picture images of the same content photographed from different angles, and which displays these images lined up from left to right so that they appear three-dimensional, and an application, which associates two sounds, and reproduces the sounds separately on the left and right, can also be used.

Further, the present invention can also be constituted such that a plurality of associated data can be reproduced separately instead of reproduced simultaneously. For example, if text data comprising an image data title and comments is associated with image data, the constitution can be such that only the image data is reproduced when image data reproduction is instructed, and test data is reproduced only when a text data reproduction command is given.

Furthermore, the present invention can also be constituted such that a filename for storage and a display name displayed to a user can be attached separately to the respective data stored in data storage 111. For example, in screen 601 of Fig. 6 and screen 701 of Fig. 7, the same filename as the filename stored in data storage 111 is displayed, but the constitution can be such that a user can attached an arbitrary title to image data and sound data, and the user-assigned title can be displayed. In this case, it is desirable that a filename and title be stored separately for each data in data storage 111, and that a user be able to arbitrarily change a title, but not be able to change a filename. This enables a user to attach an arbitrary title while maintaining the data association as-is.

Furthermore, in this embodiment, in order to associate a plurality of data, the filenames were made the same, and the link file attributes were set to "True", but the present invention can also be constituted such that a plurality of data can be associated by simply making the filenames the same without setting link file attributes. In this case, when retrieving associated data, data of the same filename is retrieved from all the files. When association is performed by simply making the filenames the same, it is desirable that only a certain fixed file format be capable of association in order to establish accurate associations. Or, it is desirable that restrictions be put in place for data that is not to be associated, such that the same filename not be used for other data even when the extension is different.

Furthermore, in this embodiment, an explanation was given for a "multimedia mail transmitting and receiving device," but the transmission and reception method for multimedia mail related to the present invention, and the device utilized therefor, can be executable programs equivalent to the functions of data storage controller 102, reproduction controller 103 and transmission controller 104 instead of a device. Further, this executable program can be distributed over the Internet, and downloaded and used by cellular telephones and other such terminals.

As explained hereinabove, according to the present invention, a plurality of data can be associated, and the associated data can be transmitted and received via mail.

## Claims

1. A transmitting device, comprising:
a data storage part which attaches to a first data and a second data either names or symbols, at the least a portion of which is common, and stores same on a storage medium;
an inputting part which inputs a transmission request for data stored on said storage medium; and
a controller which controls such that when a transmission request for said first data is inputted from said inputting part, said first data and said second data are read out from said storage medium, and said first data and said second data are transmitted.

2. The transmitting device according to Claim 1, wherein said controller reads out said first data and said second data from said storage medium using either a name or symbol attached to the data.

3. The transmitting device according to Claim 1, wherein said data storage part stores on said storage medium association information, which indicates that there is data associated with said first data.

4. The transmitting device according to Claim 1, wherein said data storage part stores on said storage medium information indicating whether or not a user is permitted to access either said first data or said second data.

5. The transmitting device according to Claim 1, wherein said data storage part stores association information indicating whether or not there is data associated to data which is stored on said storage medium, and, when a data transmission request is inputted from said inputting part, said controller reads out data stored on said storage medium using said association information.

6. The transmitting device according to Claim 1, wherein said controller comprises a notification part, which notifies that said second data will be transmitted, before transmitting said first data and said second data.

7. The transmitting device according to Claim 1, wherein said controller comprises a notification part, which notifies the quantity of data of said first and second data, before transmitting said first and second data.

8. The transmitting device according to Claim 1, wherein said controller comprises a notification part, which notifies the communications charge required to transmit said first and second data, before transmitting said first and second data.

9. A transmitting device, comprising:
a storage medium for storing a plurality of data;
a selecting part for selecting two or more data from a plurality of data stored on said storage medium;
a storage part for attaching names and symbols, at least a portion of which is common, to said selected two or more data, and for storing same on said storage medium;
a transmission data selecting part for selecting data to be transmitted from among data stored on said storage medium; and
a controller for performing control such that data selected by said transmission data selecting part, and data to which is attached either a name or a symbol, at the least a portion of which is common to the name or symbol attached to said selected data, are read out from said storage medium and transmitted.

10. The transmitting device according to Claim 9, wherein information indicating whether or not a mail transmission is restricted is stored on said storage medium for said plurality of data, respectively, and said transmitting device comprises a notification part for notifying that a mail cannot be transmitted when data for which mail transmission is restricted is selected by said selecting part.

11. A transmitting device comprising:
an image data inputting part for capturing image data;
a sound data inputting part for capturing sound data;
a communication part for accessing a network over which mails are transmitted and received;
an image data encoding part for encoding image data captured by said image data inputting part;
a sound data encoding part for encoding sound data captured by said sound data inputting part;
a memory for storing image data encoded by said image data encoding part, and sound data encoded by said sound data encoding part;
a selecting part for selecting two or more data from a plurality of image data and sound data stored in said memory;
a memory controller for performing control such that either names or symbols, at the least a portion of which is common, are attached to said selected two or more data and stored;
a transmission data selecting part for selecting data to be transmitted from among data stored in said memory; and
a controller for performing control such that data selected by said transmission data selecting part, and data to which is attached either a name or a symbol, at the least a portion of which is common to either the name or symbol attached to said selected data, are read out from said storage medium and transmitted via mail.

12. A mail receiving device, comprising:
a memory capable of storing a plurality of data;
a receiving part for receiving a mail; and
a memory controller for performing control such that, when two or more data are comprised in a mail received by said receiving part, either names or symbols, at the least a portion of which is common, are attached to said two or more data to associate said two or more data with each other and stored in said memory.

13. The mail receiving device according to Claim 12, comprising:
a decoding part for decoding data stored in said storage part;
a reproducing part for reproducing data decoded by said decoding part;
a selecting part for selecting data to be reproduced from among a plurality of data stored in said memory; and
a controller for performing control such that, when there is associated data, which is associated to data selected by said selecting part and stored in said memory, said selected data and associated data are read out from said memory, decoded by said decoding part, and reproduced by said reproducing part.

14. A method for transmitting a first data and a second data via mail, comprising the steps of:
attaching to said second data either a name or symbol, a portion of which is common to either the name or symbol attached to said first data; and
transmitting said first data and said second data when instructions for transmitting said first data via mail are inputted.

15. A method for transmitting a first data and a second data via mail, comprising the steps of:
storing said first data on a storage medium;
attaching to said second data either a name or a symbol, a portion of which is common to either the name or symbol attached to said first data, and storing same on said storage medium; and
reading said first data and said second data from said storage medium, and transmitting said first data and said second data when instructions for transmitting said first data via mail are inputted.

16. The method according to Claim 15, wherein information indicating there is data associated to said first data is stored on said storage medium.

17. The method according to Claim 15, wherein information indicating whether or not a user is permitted to access either said first data or said second data is stored on said storage medium.
